# FASCICULE DE BREVET EUROPEEN

(11) **EP 1 730 229 B1**
(45) Date de publication et mention de la délivrance du brevet: **03.09.2008**
(21) Numéro de dépôt: 05715288.6
(22) Date de dépôt: 10.02.2005
(51) Int. Cl.: C08L 21/00, C08K 5/00

(54) **SYSTEME PLASTIFIANT POUR COMPOSITION DE CAOUTCHOUC**
WEICHMACHERSYSTEM FÜR EINE KAUTSCHUKMASSE
PLASTICISING SYSTEM FOR A RUBBER COMPOUND

(30) Priorité: 11.02.2004 FR 0401365
(43) Date de publication de la demande: 13.12.2006
(73) Titulaire: Société de Technologie Michelin, 63000 Clermont-Ferrand (FR); Michelin Recherche et Technique S.A., 1763 Granges-Paccot (CH)
(72) Inventeur: BRUNELET, Thierry, F-63100 Clermont-Ferrand (FR); DINH, Martine, F-63530 Volvic (FR); FAVROT, Jean-Michel, F-63800 Cournon d'Auvergne (FR); LABRUNIE, Philippe, F-63830 Durtol (FR); LOPITAUX, Garance, F-03330 Bellenaves (FR); ROYET, Jean-Gabriel, F-63540 Romagnat (FR)
(74) Mandataire: Ribière, Joel
(86) Numéro de dépôt international: PCT/EP2005/001338
(87) Numéro de publication internationale: WO 2005/087859

(56) Documents cités:
- NULL V: "Safe process oils for tires with low environmental impact" KAUTSCHUK UND GUMMI - KUNSTSTOFFE - ASBEST, DR. ALFRED HUTHIG VERLAG GMBH. HEIDELBERG, DE, vol. 52, no. 12, 1999, pages 799-800,802, XP002184259 cité dans la demande
- J. BOWMAN, M. DA VIA, M. E. PATTNELLI, P. TORLORETO: "The influence of non-toxic extender oil on SBR performances" KAUTSCHUK GUMMI KUNSTSTOFFE, vol. 57, no. 1, 1 février 2004 (2004-02-01), pages 31-36, XP001183198 HEIDELBERG

## Description

La présente invention se rapporte aux compositions de caoutchouc destinées notamment à la fabrication de pneumatiques ou de produits semi-finis pour pneumatiques, elle est plus particulièrement relative aux systèmes plastifiants utilisables pour la plastification de telles compositions.

Les compositions de caoutchouc pour pneumatiques comportent de manière connue des agents plastifiants utilisés pour la préparation ou synthèse de certains élastomères diéniques, pour améliorer la processabilité desdites compositions à l'état cru ainsi que certaines de leurs propriétés d'usage à l'état cuit comme par exemple, dans le cas de bandes de roulement de pneumatiques, leur adhérence sur sol mouillé ou encore leur résistance à l'abrasion et aux coupures.

Depuis fort longtemps, ce sont essentiellement des huiles dérivées du pétrole et fortement aromatiques, connues sous le nom d'huiles DAE (pour *"Distillate Aromatic Extracts"*), qui ont été utilisées pour remplir cette fonction d'agent plastifiant. Nombre de manufacturiers de pneumatiques, pour des raisons environnementales, envisagent aujourd'hui de remplacer progressivement ces huiles DAE par des huiles de substitution du type "non-aromatiques", en particulier par des huiles dites MES (pour *"Medium Extracted Solvates''*) ou TDAE *( "Treated Distillate Aromatic Extracts"*) se caractérisant par un très faible taux de polyaromatiques (environ 20 à 50 fois moins).

Les Demanderesses ont constaté que le remplacement, dans des compositions de caoutchouc pour pneumatique, des huiles aromatiques DAE par ces huiles MES ou TDAE se traduisait de manière inattendue par une diminution de la résistance à l'abrasion et aux coupures desdites compositions, cette diminution pouvant être même rédhibitoire pour certaines applications, notamment vis-à-vis du problème d'écaillement des bandes de roulement de pneumatiques.

L' « écaillement » (en anglais *"chipping"* ou *"scaling"*) est un mécanisme d'endommagement connu qui correspond à des arrachements lamellaires superficiels - en forme d'écailles - de la "gomme" (ou composition de caoutchouc) constitutive des bandes de roulement, sous certaines conditions de roulage agressives. Ce problème est notamment rencontré sur des pneumatiques pour véhicule hors-la-route ou de type chantier ou génie civil, ayant à rouler sur différents types de sols, pour certains caillouteux et relativement agressifs ; il a été par exemple décrit, ainsi que certaines solutions pour y remédier, dans les documents de brevet EP-A-0 030 579 et FR-A-2 080 661 (ou GB-A-1 343 487).

Poursuivant leurs recherches, les Demanderesses ont découvert que le remplacement d'une partie de ces huiles MES ou TDAE par un autre agent plastifiant spécifique permettait non seulement de résoudre le problème ci-dessus, mais, ce qui est encore plus surprenant, d'améliorer encore la résistance à l'abrasion et aux coupures des compositions de caoutchouc utilisant des huiles conventionnelles aromatiques à titre d'agent plastifiant.

En conséquence, un premier objet de l'invention concerne une composition de caoutchouc à base d'au moins un élastomère diénique, une charge renforçante, un système plastifiant et un système de réticulation, caractérisée en ce que ledit système plastifiant comporte (pce = parties en poids pour cent parties d'élastomère) :
- entre 5 et 35 pce d'une huile MES ou TDAE ;
- entre 5 et 35 pce d'une résine polylimonène.

L'invention a également pour objet un procédé pour préparer une composition de caoutchouc ayant une résistance à l'abrasion et aux coupures améliorée, cette composition étant à base d'un élastomère diénique, d'une charge renforçante, d'un système plastifiant et d'un système de réticulation, ledit procédé comportant les étapes suivantes :
- incorporer à un élastomère diénique, au cours d'une première étape dite "non-productive", au moins une charge renforçante et un système plastifiant, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape dite "productive", le système de réticulation ;
- malaxer le tout jusqu'à une température maximale inférieure à 110°C,
et étant caractérisé en ce que ledit système plastifiant comporte :
- entre 5 et 35 pce d'une huile MES ou TDAE ;
- entre 5 et 35 pce d'une résine polylimonène.

L'invention concerne également, en soi, un système plastifiant utilisable pour la plastification d'une composition de caoutchouc diénique, ledit système comportant en combinaison une huile MES ou TDAE et une résine polylimonène, ainsi que l'utilisation d'un tel système pour la plastification d'une composition de caoutchouc diénique.

L'invention a également pour objet l'utilisation d'une composition selon l'invention pour la fabrication d'un article fini ou d'un produit semi-fini en caoutchouc destiné à tout système de liaison au sol de véhicule automobile, tel que pneumatique, appui interne de sécurité pour pneumatique, roue, ressort en caoutchouc, articulation élastomérique, autre élément de suspension et anti-vibratoire.

L'invention a particulièrement pour objet l'utilisation d'une composition selon l'invention pour la fabrication de pneumatiques ou de produits semi-finis en caoutchouc destinés à ces pneumatiques, ces produits semi-finis étant de préférence choisis dans le groupe constitué par les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

L'invention a plus particulièrement pour objet l'utilisation d'une composition selon l'invention pour la fabrication d'une bande de roulement de pneumatique présentant une résistance aux coupures et à l'écaillement améliorée.

L'invention a également pour objet les articles finis et produits semi-finis en caoutchouc eux-mêmes, en particulier les pneumatiques et produits semi-finis pour pneumatiques, lorsqu'ils comportent une composition élastomérique conforme à l'invention. Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route - , engins agricoles ou de génie civil, avions, autres véhicules de transport ou de manutention.

L'invention ainsi que ses avantages seront aisément compris à la lumière de la description et des exemples de réalisation qui suivent.

### I. MESURES ET TESTS UTILISES

Les compositions de caoutchouc selon l'invention sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### I-2. Temps de grillage

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Dureté Shore A

La dureté Shore A des compositions après cuisson est appréciée conformément à la norme ASTM D 2240-86.

### I-4. Résistance aux coupures et à l'écaillement

La résistance aux coupures et à l'écaillement des compositions de caoutchouc est évaluée à travers un test de roulage de pneumatiques dont les bandes de roulement sont constituées desdites compositions.

Le test est conduit à vitesse de roulage modérée (inférieure à 60 km/h), sur deux circuits successifs :
- un premier roulage sur un circuit en terre battue caillouteux (cailloux à grosse granulométrie), destiné à fragiliser la bande de roulement, sous forme de coupures et autres agressions superficielles des pains de gomme constitutifs de sa sculpture ;
- un second roulage sur un circuit goudronné fortement virageux, destiné à "révéler" l'écaillement, suite à l'arrachement de morceaux de caoutchouc (en forme d'écailles), selon les plans fragilisés.

A la sortie du test de roulage, l'état des bandes de roulement est évalué d'une part visuellement (photographies) par l'attribution d'une note (selon une échelle de gravité de 1 à 10), d'autre part par le mesurage de la perte de poids. La résistance à l'écaillement est finalement appréciée par un note globale relative (base 100 sur un produit de référence).

### II. CONDITIONS DE REALISATION DE L'INVENTION

La composition de caoutchouc selon l'invention, utilisable notamment pour la fabrication d'un pneumatique ou d'une bande de roulement de pneumatique, est à base d'au moins un élastomère diénique, une charge renforçante, un système de réticulation et un système plastifiant spécifique.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des % en masse.

### II-1. Elastomère diénique

Par élastomère ou caoutchouc "diénique", doit être compris de manière connue un (on entend un ou plusieurs) élastomère issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie dés élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (c'est-à-dire pour plus de 50 pce) un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C ; un tel SBR peut être avantageusement utilisé en mélange avec un BR possédant de préférence plus de 90% de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre -65°C et -10°C et d'un (un ou plusieurs) élastomère diénique dit "à basse Tg" comprise entre -110°C et -80°C, plus préférentiellement entre -105°C et -90°C. L'élastomère "à haute Tg" est choisi de préférence dans le groupe constitué par les S-SBR, les E-SBR, le caoutchouc naturel, les polyisoprènes de synthèse (présentant un taux d'enchaînements cis-1,4 de préférence supérieur à 95%), les BIR, les SIR, les SBIR, et les mélanges de ces élastomères. L'élastomère "à basse Tg" comprend de préférence des unités butadiène selon un taux au moins égal à 70% ; il consiste de préférence en un polybutadiène (BR) présentant un taux d'enchaînements cis-1,4 supérieur à 90 %.

Selon un mode particulier de réalisation de l'invention, la composition de caoutchouc comprend par exemple de 40 à 100 pce, en particulier de 50 à 100 pce, d'un élastomère à haute Tg en coupage avec 0 à 60 pce, en particulier de 0 à 50 pce, d'un élastomère à basse Tg ; selon un autre mode de réalisation, elle comprend par exemple 100 pce d'un ou plusieurs copolymères de styrène et de butadiène préparés en solution.

Selon un autre mode particulier de réalisation, la composition de caoutchouc comprend au moins, à titre d'élastomère haute Tg, un S-SBR présentant une Tg entre -50°C et -15°C ou au moins un E-SBR présentant une Tg comprise entre -65°C et -30°C.

Selon un autre mode particulier de réalisation de l'invention, l'élastomère diénique de la composition selon l'invention comprend un coupage d'un BR (à titre d'élastomère basse Tg) présentant un taux d'enchaînements cis-1,4 supérieur à 90%, avec un S-SBR ou un E-SBR (à titre d'élastomère haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, ou encore une charge inorganique renforçante telle que de la silice à laquelle est associé un agent de couplage.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HD"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices telles que décrites dans la demande WO 03/016387. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits dans les demandes WO 99/28376, WO 00/73372, WO 02/053634, WO 2004/003067, WO 2004/056915.

L'homme du métier comprendra qu'à titre de charge équivalente de la charge inorganique renforçante ci-dessus, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Lorsque les compositions de l'invention sont destinées à des bandes de roulement de pneumatique à faible résistance au roulement, la charge inorganique renforçante utilisée, en particulier s'il s'agit de silice, a de préférence une surface BET comprise entre 60 et 250 m²/g, par exemple comprise entre 80 et 230 m²/g.

De manière préférentielle, le taux de charge renforçante totale (noir de carbone et/ou charge inorganique renforçante) est compris entre 20 et 200 pce, plus préférentiellement entre 30 et 150 pce (parties en poids pour cent parties d'élastomère), l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour coupler la charge inorganique renforçante à l'élastomère diénique, on utilise un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 et WO03/002649.

Conviennent en particulier, sans que la définition ci-après soit limitative, des silanes polysulfurés dits "symétriques" répondant à la formule générale (I) suivante:

(I) Z - A - Sₙ - A - Z ,

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 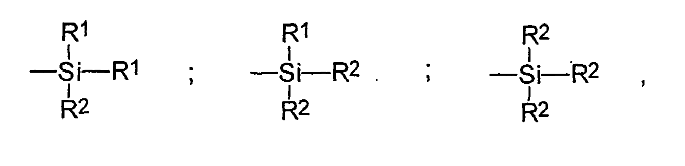
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe hydroxyle, alkoxyle en C₁-C₁₈ ou cycloalkoxyle en C₅-C₁₈ (de préférence un groupe choisi parmi hydroxyle, alkoxyles en C₁₋C₈ et cycloalkoxyles en C₅-C₈, plus préférentiellement encore un groupe choisi parmi hydroxyle et alkoxyles en C₁-C₄, en particulier parmi hydroxyle, méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure ou disulfure de bis-monoéthoxydiméthylsilylpropyl tel que décrits dans la demande de brevet WO 02/083782.

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 et WO 02/31041.

Dans les compositions de caoutchouc conformes à l'invention, la teneur en agent de couplage est préférentiellement comprise entre 2 et 15 pce, plus préférentiellement entre 4 et 12 pce (par exemple entre 3 et 8 pce). Mais il est en général souhaitable d'en utiliser le moins possible. Par rapport au poids de charge inorganique renforçante, le taux d'agent de couplage représente typiquement entre 0,5 et 15% en poids par rapport à la quantité de charge inorganique renforçante. Dans le cas par exemple de bandes de roulement de pneumatiques pour véhicules tourisme, l'agent de couplage est utilisé à un taux préférentiel inférieur à 12%, voire même inférieur à 10% en poids par rapport à cette quantité de charge inorganique renforçante.

L'agent de couplage pourrait être préalablement greffé sur l'élastomère diénique ou sur la charge inorganique renforçante. On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

### II-3. Système plastifiant

Les compositions de caoutchouc de l'invention ont pour caractéristique essentielle d'utiliser un système plastifiant comportant au moins :
- entre 5 et 35 pce d'une huile MES ou TDAE ;
- entre 5 et 35 pce d'une résine polylimonène.

Les huiles MES et TDAE sont bien connues de l'homme du métier, on se reportera par exemple à la publication récente KGK (Kautschuk Gummi Kunstoffe) 52. Jahrgang, Nr. 12/99, pp. 799-805, intitulée "Safe Process Oils for Tires with Low Environmental Impact*".* Des demandes de brevet décrivant l'emploi de telles huiles, en substitution d'huiles aromatiques conventionnelles, sont par exemple EP-A-1 179 560 (ou US2002/0045697) ou EP-A-1 270 657.

Le polylimonène est par définition un homopolymère du limonène ou méthyl-1 isopropényl-4 cyclohexène. Il se présente de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

Les résines polylimonène (on rappelle que l'appellation "résine" est réservée par définition à un composé solide) sont connues essentiellement pour leur application comme adhésifs dans l'industrie alimentaire.

Le taux de résine polylimonène doit compris entre 5 et 35 pce. En dessous du minimum indiqué, l'effet technique visé est insuffisant alors qu'au-delà de 35 pce, le pouvoir collant des compositions à l'état cru, sur les outils de mélangeage, devient rédhibitoire du point de vue industriel. Pour cette raison, le taux de résine polylimonène est de préférence compris entre 5 et 25 pce, plus préférentiellement entre 5 et 20 pce.

Celui de l'huile MES ou TDAE est de préférence compris entre 10 et 30 pce, plus préférentiellement compris entre 10 et 25 pce, tandis que le taux de système plastifiant total de l'invention comportant l'huile MES et/ou TDAE et la résine polylimonène, est compris selon un mode préférentiel entre 15 et 45 pce, plus préférentiellement entre 20 et 40 pce.

La résine polylimonène utilisée présente au moins une (plus préférentiellement l'ensemble) des caractéristiques préférentielles suivantes :
- une Tg supérieure à 40°C (plus particulièrement supérieure à 50°C) ;
- une masse moléculaire moyenne en nombre (Mn) comprise entre 400 et 2000 g/mol ;
- un indice de polymolécularité (Ip) inférieur à 2 (rappel : Ip = Mw/Mn avec Mw masse moléculaire moyenne en poids).

Encore plus préférentiellement, la résine polylimonène présente au moins une (plus préférentiellement l'ensemble) des caractéristiques préférentielles suivantes :
- une Tg comprise entre 50°C et 120°C (plus particulièrement entre 60°C et 100°C) ;
- une masse moléculaire Mn comprise entre 500 et 1000 g/mol ;
- un indice de polymolécularité inférieur à 1,8.

La température de transition vitreuse Tg est mesurée de manière connue par DSC (Differential Scanning Calorimetry), selon la norme ASTM D3418 (1999). La macrostructure (Mw et Mn) du polylimonène est déterminé par chromatographie d'exclusion stérique à la température de 35°C (solvant tétrahydrofurane selon débit de 1 ml/min ; concentration 1 g/l; étalonnage en masse de polystyrène ; détecteur constitué d'un réfractomètre différentiel).

Les résines polylimonène sont disponibles commercialement, par exemple vendues :
- par la société DRT sous la dénomination "Dercolyte L 120" (Mn = 625 g/mol ; Mw = 1010 g/mol ; Ip = 1,6 ; Tg = 72°C) ;
- par la société ARIZONA sous la dénomination "Sylvagum TR7125C" (Mn = 630 g/mol ; Mw = 950 g/mol ; Ip = 1,5 ; Tg = 70°C).

Elles peuvent être également préparées selon des procédés connus, par exemple comme suit : On pèse dans une boîte à gants, sous atmosphère inerte, 0,42 g d'AlCl₃ que l'on place dans une bouteille "Steinie" sous azote. On introduit ensuite dans cette bouteille 50 ml de toluène anhydre, puis 50 ml de D-limonène pur (énantiomère dextrogyre) puis la bouteille est placée sous agitation dans un bain thermostaté à 25°C, pendant 4 heures. On stoppe la réaction avec 3 ml d'acétylacétone, et on récupère la résine par coagulation dans le méthanol après rajout de 0,4 pce d'antioxydant phénolique ("Etyl702"). Après séchage en étuve, on obtient une résine jaune, pâle et translucide (rendement moyen 67%), exclusivement constituée d'unités limonène (Mn = 585 g/mol ; Mw = 866 g/mol ; Ip = 1,5 ; Tg = 68°C).

Selon un mode préférentiel de réalisation de l'invention, notamment lorsque la composition de l'invention est destinée à une bande de roulement de pneumatique, le système plastifiant de l'invention comprend en outre entre 5 et 35 pce (plus préférentiellement entre 10 et 30 pce) d'un triester d'acide gras insaturé (C₁₂-C₂₂) de glycérol, en particulier un trioléate de glycérol (dérivé de l'acide oléique et du glycérol), présent par exemple sous forme d'une huile végétale de tournesol ou de colza. Un tel triester permet de minimiser, dans ladite bande de roulement, d'une part l'exsudation en roulage par compression du système plastifiant total et, d'autre part, la migration dudit plastifiant vers des mélanges adjacents à la bande de roulement. Ceci se traduit par un tassement et un durcissement également minimisés pour la bande de roulement et, par conséquent, par une conservation dans le temps des performances d'adhérence. Dans un tel cas, de préférence, l'acide gras (ou l'ensemble des acides gras si plusieurs sont présents) comporte de l'acide oléique selon une fraction massique au moins égale à 60%.

En outre on a constaté que l'emploi dudit triester d'acide gras insaturé (C₁₂-C₂₂) de glycérol, tout particulièrement pour un taux préférentiel compris entre 10 et 20 pce, permettait non seulement d'améliorer l'adhérence de la bande de roulement mais encore, de manière inattendue, d'augmenter encore sa résistance à l'écaillement. Ce mode de réalisation préférentiel est particulièrement adapté, à titre d'exemples, aux bandes de roulement pour pneumatiques tourisme ou agricole, notamment pour pneumatiques tourisme du type "hiver" destinés à des routes enneigées ou verglacées.

Lorsque le système plastifiant de l'invention comprend un tel triester d'acide gras de glycérol en complément de l'huile MES ou TDAE et de la résine polylimonène, le taux global de système plastifiant dans la composition de caoutchouc de l'invention est de préférence compris entre 20 et 70 pce, plus préférentiellement compris entre 30 et 60 pce.

### II-4. Additifs divers

Les compositions de caoutchouc conformes à l'invention comportent également tout ou partie des additifs usuels habituellement utilisés dans les compositions d'élastomères destinées à la fabrication de pneumatiques, notamment de bandes de roulement, comme par exemple des pigments, des agents de protection tels que cires anti-ozone, anti-ozonants chimiques, antioxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc présentant une résistance à l'abrasion et aux coupures améliorée, comporte les étapes suivantes :
- incorporer à un élastomère diénique, au cours d'une première étape (dite "non-productive"), au moins une charge renforçante et un système plastifiant, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite "productive"), le système de réticulation ;
- malaxer le tout jusqu'à une température maximale inférieure à 110°C,
et il est caractérisé en ce que ledit système plastifiant comporte :
- entre 5 et 35 pce d'une huile MES ou TDAE ;
- entre 5 et 35 pce d'une résine polylimonène.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et agent de couplage si nécessaire, système de plastification), puis dans un deuxième temps, par exemple après une à deux minutes de malaxage, les autres additifs, éventuels agents de recouvrement ou de mise en oeuvre complémentaires, à l'exception du système de réticulation.-La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc.. Dans le cas d'une utilisation de la composition de l'invention en bande de roulement de pneumatique, le taux de soufre est par exemple compris entre 0,5 et 3,0 pce, celui de l'accélérateur primaire entre 0,5 et 5,0 pce.

La composition finale ainsi obtenue peut ensuite être calandrée, par exemple sous la forme d'une feuille, d'une plaque ou encore extrudée, par exemple pour former un profilé de caoutchouc utilisé pour la fabrication d'un produit semi-fini pour pneumatique, tel que bandes de roulement, nappes ou autres bandes, sous-couches, divers blocs de caoutchouc, renforcés ou non de renforts textiles ou métalliques, destinés à former une partie de la structure du pneumatique.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III. EXEMPLES DE REALISATION DE L'INVENTION

### III-1. Préparation des compositions

On procède pour les essais qui suivent de la manière suivante: on introduit dans un mélangeur interne à palettes usuelles du type "Banburry", rempli à 70% et dont la température initiale de cuve est d'environ 60°C, l'élastomère diénique (ou le mélange d'élastomères diéniques, le cas échéant), le système de plastification (ou son complément si une partie est déjà incorporée à l'élastomère diénique comme huile d'extension), la charge renforçante (plus un agent de couplage, voire un agent de recouvrement dans le cas d'un charge inorganique renforçante telle que silice) puis, après une à deux minutes de malaxage, les divers autres ingrédients à l'exception du système de vulcanisation.

On conduit alors un travail thermomécanique (phase non-productive) en une étape (durée totale du malaxage égale à environ 5 min), jusqu'à atteindre une température maximale de "tombée" d'environ 160°C. On récupère le mélange ainsi obtenu, on le refroidit puis on ajoute le système de vulcanisation sur un mélangeur externe (homo-finisseur) à 40°C, en mélangeant le tout (phase productive) pendant 3 à 4 minutes sur cet outil à cylindres.

Les compositions ainsi obtenues sont ensuite calandrées sous la forme de plaques (épaisseur de 2 à 3 mm) ou de feuilles fines de caoutchouc pour la mesure de leurs propriétés, ou extrudées pour former des profilés utilisables directement, après découpage et/ou assemblage aux dimensions souhaitées, comme bande de roulement de pneumatique.

### III-2. Essais de caractérisation - Résultats

### Essai 1

Cet essai a pour but de démontrer la résistance à l'écaillement améliorée d'une composition selon l'invention constituant une bande de roulement de pneumatique pour véhicule tourisme.

Cette composition selon l'invention (notée C-3) est comparée à deux autres compositions témoins (notées C-1 et C-2), les trois compositions testées étant identiques aux différences près qui suivent :
- C-1 : témoin selon art antérieur avec huile aromatique (référence) ;
- C-2 : témoin avec huile MES seule ;
- C-3 : composition avec système plastifiant selon l'invention (combinaison d'huile MES et de résine polylimonène).

Les tableaux 1 et 2 donnent la formulation des différentes compositions (tableau 1 - taux des différents produits exprimés en pce), leurs propriétés usuelles avant et après cuisson.

Les compositions C-1 et C-2 ont été formulées à iso-volume d'huile plastifiante, ce qui explique un taux légèrement plus faible d'huile MES (densité moindre) pour la composition C-2. Dans la composition C-3 selon l'invention, 2/3 environ d'huile MES ont été remplacés par de la résine polylimonène (20 pce), comparativement à la composition C-2.

La résine polylimonène utilisée possède toutes les caractéristiques préférentielles suivantes :
- une Tg entre 60°C et 100°C;
- une masse moléculaire Mw comprise entre 500 et 1000 g/mol ;
- un indice de polymolécularité inférieur à 1,8.

A la lecture du tableau 2, on note que les propriétés usuelles des compositions, avant et après cuisson, sont sensiblement identiques : valeurs égales de plasticité Mooney, temps de grillage et dureté Shore.

Mais c'est le test de résistance à l'écaillement qui démontre tout l'intérêt de la composition selon l'invention par rapport aux compositions témoins.

Les compositions C-1, C-2 et C-3 ont été utilisées comme bandes de roulement de pneumatiques tourisme à carcasse radiale, de dimension 195/65 R15 (indice de vitesse H), conventionnellement fabriqués et en tous points identiques hormis la composition de caoutchouc constitutive de la bande de roulement. Ces pneumatiques sont notés respectivement P-1, P-2 et P-3, ils ont été montés sur un véhicule tourisme pour être soumis au test d'endurance décrit au paragraphe I-4 précédent. Les conditions particulières du test sont les suivantes : véhicule Citroën modèle "C5" (pression avant et arrière : 2,2 bars) ; pneus testés montés à l'avant du véhicule ; température ambiante 25°C.

Les résultats du test de résistance à l'écaillement sont rapportés dans le tableau 3, en unités relatives, la base 100 ayant étant retenue pour le pneumatique témoin P-1 dont la bande de roulement comporte l'huile aromatique conventionnelle.

On note tout d'abord que le remplacement de l'huile aromatique par l'huile MES (pneus P-2 comparés aux pneus P-1) se traduit par une chute sensible, par ailleurs inattendue, de 15% de la résistance à l'écaillement, ce qui est tout à fait notable et peut être considéré comme rédhibitoire pour certains usages des pneumatiques.

Par contre, le remplacement d'une partie de l'huile MES par la résine polylimonène se traduit, de manière surprenante, par une remontée spectaculaire de performance (+40% pour les pneus P-3 comparativement aux pneus P-2), la résistance observée sur les pneus P-3 de l'invention étant même supérieure de 15% à celle des pneus P-1 constituant la référence de départ.

### Essai 2

L'essai 1 précédent a été reproduit en remplaçant, à titre de charge renforçante, la silice HD par du noir de carbone.

Les compositions correspondantes, notées C-4, C-5 et C-6, ont été utilisées comme bandes de roulement de pneumatiques (respectivement, notés P-4, P-5 et P-6) identiques aux précédents, et soumis au même test de roulage.

Les tableaux 4 et 5 donnent la formulation des différentes compositions (tableau 5 - taux des différents produits exprimés en pce), des propriétés avant et après cuisson. Dans la composition C-6 seule conforme à l'invention, 1/3 environ d'huile MES a été remplacé par la résine polylimonène (8 pce), comparativement à la composition C-5.

Les résultats du test de résistance à l'écaillement sont rapportés dans le tableau 6, en unités relatives, la base 100 ayant étant retenue pour les pneus P-4 comportant dans leur bande de roulement l'huile aromatique conventionnelle.

Ces résultats confirment bien ceux de l'essai 1 précédent (tableau 3), à savoir que la meilleure résistance est obtenue lorsque une partie de l'huile MES est remplacée par la résine polylimonène (pneus P-6), même si l'amplitude des effets apparaît légèrement moins prononcée que pour les compositions précédentes renforcées d'une charge inorganique.

**Tableau 1**

| Composition N° : | C-1 | C-2 | C-3 |
|---|---|---|---|
| S-SBR (1) | 70 | 70 | 70 |
| BR (2) | 30 | 30 | 30 |
| silice (3) | 81 | 81 | 81 |
| agent de couplage (4) | 6.5 | 6.5 | 6.5 |
| noir de carbone (5) | 10 | 10 | 10 |
| huile aromatique (6) | 37 | - | - |
| huile MES (7) | - | 31.5 | 11.5 |
| résine polylimonène (8) | - | - | 20 |
| ZnO (9) | 1.5 | 1.5 | 1.5 |
| acide stéarique (10) | 2 | 2 | 2 |
| antioxydant (11) | 1.9 | 1.9 | 1.9 |
| DPG (12) | 1.5 | 1.5 | 1.5 |
| soufre | 1 | 1 | 1 |
| accélérateur (13) | 2 | 2 | 2 |

| | | | |
|---|---|---|---|
| (1) SBR solution étendu à l'huile (taux exprimé en SBR sec) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) silice "Zeosil 1165MP" de la société Rhodia, type "HD"-(BET et CTAB : environ 160 m²/g) ; (4) agent de couplage TESPT ("Si69" de la société Degussa) ; (5) noir de carbone N234 (grade ASTM); (6) huile aromatique totale (y compris huile d'extension du SBR) ; (7) huile MES totale (y compris huile d'extension du SBR) ; (8) résine "Dercolyte L120" de la société DRT ; (9) oxyde de zinc (grade industriel - société Umicore) ; (10) stéarine ("Pristerene 4931" - société Uniqema) ; (11) N-1,3-diméthylbutyl-N-phénylparaphénylènediamine (Santoflex 6-PPD de la société Flexsys) ; (12) diphénylguanidine (Perkacit DPG de la société Flexsys) ; (13) N-cyclohexyl-2-benzothiazyl-sulfénamide (Santocure CBS de la société Flexsys). | | | |

**Tableau 2**

| Composition N°: | C-1 | C-2 | C-3 |
|---|---|---|---|
| *Propriétés avant cuisson:* | | | |
| Mooney (UM) | 57 | 56 | 58 |
| T5 (min) | 12 | 12 | 12 |

| *Propriétés après cuisson :* | | | |
|---|---|---|---|
| Dureté Shore | 67 | 68 | 67 |

**Tableau 3**

| Pneumatiques N°: | P-1 | P-2 | P-3 |
|---|---|---|---|
| Résistance à l'écaillement | 100 | 85 | 115 |

| | | | |
|---|---|---|---|
| (NB : une valeur supérieure à 100 indique une performance améliorée par rapport au témoin de base 100) | | | |

**Tableau 4**

| Composition N° : | C-4 | C-5 | C-6 |
|---|---|---|---|
| E-SBR (1) | 80 | 80 | 80 |
| BR (2) | 20 | 20 | 20 |
| noir de carbone (3) | 66 | 66 | 66 |
| huile aromatique (4) | 29 | - | - |
| huile MES (5) | - | 25 | 17 |
| résine polylimonène (6) | - | - | 8 |
| ZnO (7) | 1.5 | 1.5 | 1.5 |
| acide stéarique (8) | 2 | 2 | 2 |
| antioxydant (9) | 1.9 | 1.9 | 1.9 |
| soufre | 1 | 1 | 1 |
| accélérateur (10) | 2 | 2 | 2 |

| | | | |
|---|---|---|---|
| (1) SBR émulsion étendu à l'huile (exprimé en SBR sec) ; 24% de styrène, 15% de motifs polybutadiène 1-2 et 78% de motifs polybutadiène 1-4 trans (Tg = -48°C) ; (2) BR avec 4,3% de 1-2 ; 2,7% de trans ; 93% de cis 1-4 (Tg = -106°C) ; (3) noir de carbone N234 (grade ASTM) ; (4) huile aromatique totale (y compris huile d'extension du SBR) ; (5) huile MES totale (y compris huile d'extension du SBR) ; (6) résine "Dercolyte L120" de la société DRT ; (7) oxyde de zinc (grade industriel - société Umicore) ; (8) stéarine ("Pristerene 4931" - société Uniqema) ; (9) N-1,3-diméthylbutyl-N-phénylparaphénylènediamine (Santoflex 6-PPD de la société Flexsys) ; (10) N-cyclohexyl-2-benzothiazyl-sulfénamide (Santocure CBS de la société Flexsys). | | | |

**Tableau 5**

| Composition N°: | C-4 | C-5 | C-6 |
|---|---|---|---|
| *Propriétés avant cuisson:* | | | |
| Mooney (UM) | 87 | 86 | 90 |
| T5 (min) | 24 | 20 | 23 |
| *Propriétés après cuisson :* | | | |
| Dureté Shore | 66 | 67 | 67 |

**Tableau 6**

| Pneumatiques N°: | P-4 | P-5 | P-6 |
|---|---|---|---|
| Résistance à l'écaillement | 100 | 90 | 110 |

| | | | |
|---|---|---|---|
| (NB : une valeur supérieure à 100 indique une performance améliorée par rapport au témoin de base 100) | | | |

## Revendications

1. Composition de caoutchouc à base d'au moins un élastomère diénique, une charge renforçante, un système plastifiant et un système de réticulation, **caractérisée en ce que** ledit système plastifiant comporte (pce = parties en poids pour cent d'élastomère) :
- entre 5 et 35 pce d'une huile MES ou TDAE ;
- entre 5 et 35 pce d'une résine polylimonène.

2. Composition selon la revendication 1, le taux de résine polylimonène étant compris entre 5 et 25 pce.

3. Composition selon la revendication 2, le taux de résine polylimonène étant compris entre 5 et 20 pce.

4. Composition selon l'une quelconque des revendications 1 à 3, la température de transition vitreuse (Tg) de la résine polylimonène étant supérieure à 40°C.

5. Composition selon la revendication 4, Tg étant supérieure à 50°C.

6. Composition selon l'une quelconque des revendications 1 à 5, la masse moléculaire moyenne en nombre (Mn) de la résine polylimonène étant comprise entre 400 et 2000 g/mol.

7. Composition selon la revendication 6, Mn étant comprise entre 500 et 1000 g/mol.

8. Composition selon l'une quelconque des revendications 1 à 7, le taux d'huile MES ou TDAE étant compris entre 10 et 30 pce.

9. Composition selon la revendication 8, le taux d'huile MES ou TDAE étant compris entre 10 et 25 pce.

10. Composition selon l'une quelconque des revendications 1 à 9, le taux de système plastifiant total étant compris entre 15 et 45 pce.

11. Composition selon la revendication 10, le taux de système plastifiant total étant compris entre 20 et 40 pce.

12. Composition selon l'une quelconque des revendications 1 à 9, le système plastifiant comportant en outre un triester d'acide gras insaturé (C₁₂-C₂₂) de glycérol.

13. Composition selon la revendication 12, le triester étant un trioléate de glycérol.

14. Composition selon la revendication 13, le trioléate de glycérol étant présent sous forme d'une huile végétale de tournesol ou de colza.

15. Composition selon l'une quelconque des revendications 12 à 14, le taux de triester étant compris entre 5 et 35 pce.

16. Composition selon l'une quelconque des revendications 12 à 15, le taux de système plastifiant total étant compris entre 20 et 70 pce.

17. Composition selon la revendication 16, le taux de système plastifiant total étant compris entre 30 et 60 pce.

18. Composition selon l'une quelconque des revendications 1 à 17, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

19. Composition selon l'une quelconque des revendications 1 à 18, le taux de charge renforçante étant compris entre 20 et 200 pce.

20. Composition selon la revendication 19, le taux de charge renforçante étant compris entre 30 et 150 pce.

21. Composition selon les revendications 19 ou 20, la charge renforçante comportant majoritairement une charge inorganique.

22. Composition selon la revendication 21, la charge renforçante inorganique étant de la silice.

23. Composition selon les revendications 19 ou 20, la charge renforçante comportant majoritairement une charge organique.

24. Composition selon la revendication 23, la charge organique renforçante étant du noir de carbone.

25. Procédé pour préparer une composition de caoutchouc présentant une résistance à l'abrasion et aux coupures améliorée, cette composition étant à base d'un élastomère diénique, d'une charge renforçante, d'un système plastifiant et d'un système de réticulation, ledit procédé comportant les étapes suivantes :
• incorporer à un élastomère diénique, au cours d'une première étape dite "non-productive", au moins une charge renforçante et un système plastifiant, en malaxant thermomécaniquement le tout, en une ou plusieurs fois, jusqu'à atteindre une température maximale comprise entre 110°C et 190°C ;
• refroidir l'ensemble à une température inférieure à 100°C ;
• incorporer ensuite, au cours d'une seconde étape dite "productive", le système de réticulation ;
• malaxer le tout jusqu'à une température maximale inférieure à 110°C,
et étant **caractérisé en ce que** ledit système plastifiant comporte :
- entre 5 et 35 pce d'une huile MES ou TDAE ;
- entre 5 et 35 pce d'une résine polylimonène.

26. Procédé selon la revendication 25, le taux de résine polylimonène étant compris entre 5 et 25 pce.

27. Procédé selon la revendication 26, le taux de résine polylimonène étant compris entre 5 et 20 pce.

28. Procédé selon l'une quelconque des revendications 25 à 27, la température de transition vitreuse (Tg) de la résine polylimonène étant supérieure à 40°C.

29. Procédé selon l'une quelconque des revendications 25 à 28, la masse moléculaire moyenne en nombre (Mn) de la résine polylimonène étant comprise entre 400 et 2000 g/mol.

30. Procédé selon l'une quelconque des revendications 25 à 29, le taux d'huile MES ou TDAE étant compris entre 10 et 30 pce.

31. Procédé selon l'une quelconque des revendications 25 à 30, le taux de système plastifiant total étant compris entre 15 et 45 pce.

32. Procédé selon l'une quelconque des revendications 25 à 31, le système plastifiant comportant en outre un triester d'acide gras insaturé (C₁₂-C₂₂) de glycérol.

33. Procédé selon la revendication 32, le triester étant un trioléate de glycérol.

34. Procédé selon la revendication 33, le trioléate de glycérol étant présent sous forme d'une huile végétale de tournesol ou de colza.

35. Procédé selon l'une quelconque des revendications 32 à 34, le taux de triester étant compris entre 5 et 35 pce.

36. Procédé selon l'une quelconque des revendications 32 à 35, le taux de système plastifiant total étant compris entre 20 et 70 pce.

37. Procédé selon l'une quelconque des revendications 25 à 36, l'élastomère diénique étant choisi dans le groupe constitué par les polybutadiènes, le caoutchouc naturel, les polyisoprènes de synthèse, les copolymères de butadiène, les copolymères d'isoprène et les mélanges de ces élastomères.

38. Procédé selon l'une quelconque des revendications 25 à 37, le taux de charge renforçante étant compris entre 20 et 200 pce.

39. Utilisation d'une composition selon l'une quelconque des revendications 1 à 24, pour la fabrication d'un article fini ou d'un produit semi-fini destiné à un système de liaison au sol de véhicule automobile.

40. Utilisation selon la revendication 39, l'article fini étant un pneumatique.

41. Utilisation selon la revendication 39, le produit semi-fini étant une bande de roulement de pneumatique.

42. Utilisation d'une composition selon l'une quelconque des revendications 12 à 17, pour la fabrication d'une bande de roulement de pneumatique hiver.

43. Article fini destiné à un système de liaison au sol de véhicule automobile, comportant une composition selon l'une quelconque des revendications 1 à 24.

44. Article fini selon la revendication 43, consistant en un pneumatique.

45. Pneumatique hiver comportant une composition de caoutchouc selon l'une quelconque des revendications 12 à 17.

46. Produit semi-fini destiné à un système de liaison au sol de véhicule automobile, comportant une composition selon l'une quelconque des revendications 1 à 24.

47. Produit semi-fini selon la revendication 46, consistant en une bande de roulement de pneumatique.

48. Bande de roulement de pneumatique hiver comportant une composition de caoutchouc selon l'une quelconque des revendications 12 à 17.

49. Système plastifiant utilisable pour la plastification d'une composition de caoutchouc diénique, **caractérisé en ce qu'**il comporte une huile MES ou TDAE et une résine polylimonène.

50. Système plastifiant selon la revendication 49, **caractérisé en ce qu'**il comporte en outre un triester d'acide gras insaturé (C₁₂-C₂₂) de glycérol.

51. Système plastifiant selon la revendication 50, le triester étant un trioléate de glycérol.

52. Système plastifiant selon la revendication 51, le trioléate de glycérol étant présent sous forme d'une huile végétale de tournesol ou de colza.

53. Utilisation d'un système plastifiant selon l'une quelconque des revendications 49 à 52, pour la plastification d'une composition de caoutchouc diénique.

## Claims

1. A rubber composition based on at least a diene elastomer, a reinforcing filler, a plasticising system and a cross-linking system, **characterised in that** said plasticising system comprises (phr = parts by weight per hundred parts of elastomer):
- between 5 and 35 phr of an MES or TDAE oil;
- between 5 and 35 phr of a polylimonene resin.

2. A composition according to Claim 1, the amount of polylimonene resin being between 5 and 25 phr.

3. A composition according to Claim 2, the amount of polylimonene resin being between 5 and 20 phr.

4. A composition according to any one of Claims 1 to 3, the glass transition temperature (Tg) of the polylimonene resin being greater than 40°C.

5. A composition according to Claim 4, Tg being greater than 50°C.

6. A composition according to any one of Claims 1 to 5, the number-average molecular weight (Mn) of the polylimonene resin being between 400 and 2000 g/mol.

7. A composition according to Claim 6, Mn being between 500 and 1000 g/mol.

8. A composition according to any one of Claims 1 to 7, the amount of MES or TDAE oil being between 10 and 30 phr.

9. A composition according to Claim 8, the amount of MES or TDAE oil being between 10 and 25 phr.

10. A composition according to any one of Claims 1 to 9, the amount of total plasticising system being between 15 and 45 phr.

11. A composition according to Claim 10, the amount of total plasticising system being between 20 and 40 phr.

12. A composition according to any one of Claims 1 to 9, the plasticising system furthermore comprising an unsaturated (C₁₂₋C₂₂) fatty acid triester of glycerol.

13. A composition according to Claim 12, the triester being a glycerol trioleate.

14. A composition according to Claim 13, the glycerol trioleate being present in the form of a vegetable sunflower oil or rapeseed oil.

15. A composition according to any one of Claims 12 to 14, the amount of triester being between 5 and 35 phr.

16. A composition according to any one of Claims 12 to 15, the amount of total plasticising system being between 20 and 70 phr.

17. A composition according to Claim 16, the amount of total plasticising system being between 30 and 60 phr.

18. A composition according to any one of Claims 1 to 17, the diene elastomer being selected from among the group consisting of polybutadienes, natural rubber, synthetic polyisoprenes, butadiene copolymers, isoprene copolymers and mixtures of these elastomers.

19. A composition according to any one of Claims 1 to 18, the amount of reinforcing filler being between 20 and 200 phr.

20. A composition according to Claim 19, the amount of reinforcing filler being between 30 phr and 150 phr.

21. A composition according to Claims 19 or 20, the reinforcing filler comprising majoritarily an inorganic filler.

22. A composition according to Claim 21, the inorganic reinforcing filler being silica.

23. A composition according to Claims 19 or 20, the reinforcing filler comprising majoritarily an organic filler.

24. A composition according to Claim 23, the reinforcing organic filler being carbon black.

25. A process for preparing a rubber composition having an improved resistance to abrasion and to cuts, this composition being based on a diene elastomer, a reinforcing filler, a plasticising system and a cross-linking system, said process comprising the following steps:
• incorporating in a diene elastomer, during a first step referred to as "non-productive", at least a reinforcing filler and a plasticising system, by thermomechanically kneading the entire mixture, in one or more stages, until a maximum temperature of between 110°C and 190°C is reached;
• cooling the entire mixture to a temperature of less than 100°C;
• then incorporating, during a second step referred to as "productive", the cross-linking system;
• kneading the entire mixture until a maximum temperature of less than 110°C is reached,
and being **characterised in that** said plasticising system comprises:
- between 5 and 35 phr of an MES or TDAE oil;
- between 5 and 35 phr of a polylimonene resin.

26. A process according to Claim 25, the amount of polylimonene resin being between 5 and 25 phr.

27. A process according to Claim 26, the amount of polylimonene resin being between 5 and 20 phr.

28. A process according to any one of Claims 25 to 27, the glass transition temperature (Tg) of the polylimonene resin being greater than 40°C.

29. A process according to any one of Claims 25 to 28, the number-average molecular weight (Mn) of the polylimonene resin being between 400 and 2000 g/mol.

30. A process according to any one of Claims 25 to 29, the amount of MES or TDAE oil being between 10 and 30 phr.

31. A process according to any one of Claims 25 to 30, the amount of total plasticising system being between 15 and 45 phr.

32. A process according to any one of Claims 25 to 31, the plasticising system furthermore comprising an unsaturated (C₁₂-C₂₂) fatty acid triester of glycerol.

33. A process according to Claim 32, the triester being a glycerol trioleate.

34. A process according to Claim 33, the glycerol trioleate being present in the form of a vegetable sunflower oil or rapeseed oil.

35. A process according to any one of Claims 32 to 34, the amount of triester being between 5 and 35 phr.

36. A process according to any one of Claims 32 to 35, the amount of total plasticising system being between 20 and 70 phr.

37. A process according to any one of Claims 25 to 36, the diene elastomer being selected from among the group consisting of polybutadienes, natural rubber, synthetic polyisoprenes, butadiene copolymers, isoprene copolymers and mixtures of these elastomers.

38. A process according to any one of Claims 25 to 37, the amount of reinforcing filler being between 20 and 200 phr.

39. The use of a composition according to any one of Claims 1 to 24 for the manufacture of a finished article or a semi-finished product intended for a suspension system of a motor vehicle.

40. The use according to Claim 39, the finished article being a tyre.

41. The use according to Claim 39, the semi-finished product being a tyre tread.

42. The use of a composition according to any one of Claims 12 to 17, for the manufacture of a tread for a winter tyre.

43. A finished article intended for a suspension system of a motor vehicle, comprising a composition according to any one of Claims 1 to 24.

44. A finished article according to Claim 43, consisting of a tyre.

45. A winter tyre comprising a rubber composition according to any one of Claims 12 to 17.

46. A semi-finished product intended for a suspension system of a motor vehicle, comprising a composition according to any one of Claims 1 to 24.

47. A semi-finished product according to Claim 46, consisting of a tyre tread.

48. A tread for a winter tyre comprising a rubber composition according to any one of Claims 12 to 17.

49. A plasticising system usable for the plasticising of a diene rubber composition, **characterised in that** it comprises an MES or TDAE oil and a polylimonene resin.

50. A plasticising system according to Claim 49, **characterised in that** it furthermore comprises an unsaturated (C₁₂-C₂₂) fatty acid triester of glycerol.

51. A plasticising system according to Claim 50, the triester being a glycerol trioleate.

52. A plasticising system according to Claim 51, the glycerol trioleate being present in the form of a vegetable sunflower oil or rapeseed oil.

53. The use of a plasticising system according to any one of Claims 49 to 52, for the plasticising of a diene rubber composition.

## Patentansprüche

1. Kautschukzusammensetzung auf Basis von mindestens einem Dienelastomer, einem Verstärkerfüllstoff, einem Weichmachersystem und einem Vernetzungssystem, **dadurch gekennzeichnet, dass** das Weichmachersystem umfasst (pce = Gewichtsteile auf hundert Teile Elastomer):
- zwischen 5 und 35 pce eines MES- oder TDAE-Öls;
- zwischen 5 und 35 pce eines Polylimonen-Harzes.

2. Zusammensetzung nach Anspruch 1, wobei den Anteil an Polylimonen-Harz zwischen 5 und 25 pce liegt.

3. Zusammensetzung nach Anspruch 2, wobei der Anteil an Polylimonen-Harz zwischen 5 und 20 pce liegt.

4. Zusammensetzung nach einem der Ansprüche 1 bis 3, wobei die Glasübergangstemperatur (Tg) des Polylimonen-Harzes höher als 40 °C ist.

5. Zusammensetzung nach Anspruch 4, wobei Tg höher als 50 °C ist.

6. Zusammensetzung nach einem der Ansprüche 1 bis 5, wobei die mittlere Molekularmasse (Mn) des Polylimonen-Harzes zahlenmäßig zwischen 400 und 2000 g/mol liegt.

7. Zusammensetzung nach Anspruch 6, wobei Mn zwischen 500 und 1000 g/mol liegt.

8. Zusammensetzung nach einem der Ansprüche 1 bis 7, wobei den Anteil an MES- oder TDAE-Öl zwischen 10 und 30 pce liegt.

9. Zusammensetzung nach Anspruch 8, wobei der Anteil an MES- oder TDAE-Öl zwischen 10 und 25 pce liegt.

10. Zusammensetzung nach einem der Ansprüche 1 bis 9, wobei der Gesamtanteil an Weichmachersystem zwischen 15 und 45 pce liegt.

11. Zusammensetzung nach Anspruch 10, wobei der Gesamtanteil an Weichmachersystem zwischen 20 und 40 pce liegt.

12. Zusammensetzung nach einem der Ansprüche 1 bis 9, wobei das Weichmachersystem des Weiteren einen Triester von Glycerol mit ungesättigter Fettsäure (C₁₂-C₂₂) umfasst.

13. Zusammensetzung nach Anspruch 12, wobei der Triester ein Glyceroltrioleat ist.

14. Zusammensetzung nach Anspruch 13, wobei das Glyceroltrioleat in Form eines pflanzlichen Sonnenblumen- oder Rapsöls vorliegt.

15. Zusammensetzung nach einem der Ansprüche 12 bis 14, wobei der Triesteranteil zwischen 5 und 35 pce liegt.

16. Zusammensetzung nach einem der Ansprüche 12 bis 15, wobei der Gesamtanteil an Weichmachersystem zwischen 20 und 70 pce liegt.

17. Zusammensetzung nach Anspruch 16, wobei der Gesamtanteil an Weichmachersystem zwischen 30 und 60 pce liegt.

18. Zusammensetzung nach einem der Ansprüche 1 bis 17, wobei das Dienelastomer aus der Gruppe, bestehend aus Polybutadienen, natürlichem Kautschuk, Synthese-Polyisoprenen, Butadien-Copolymeren, Isopren-Copolymeren und Mischungen aus diesen Elastomeren ausgewählt ist.

19. Zusammensetzung nach einem der Ansprüche 1 bis 18, wobei der Anteil an Verstärkerfüllstoff zwischen 20 und 200 pce liegt.

20. Zusammensetzung nach Anspruch 19, wobei der Anteil an Verstärkerfüllstoff zwischen 30 und 150 pce liegt.

21. Zusammensetzung nach Anspruch 19 oder 20, wobei der Verstärkerfüllstoff hauptsächlich einen anorganischen Füllstoff umfasst.

22. Zusammensetzung nach Anspruch 21, wobei der anorganische Verstärkerfüllstoff Siliziumdioxid ist.

23. Zusammensetzung nach Anspruch 19 oder 20, wobei der Verstärkerfüllstoff hauptsächlich einen organischen Füllstoff umfasst.

24. Zusammensetzung nach Anspruch 23, wobei der organische Verstärkerfüllstoff Ruß ist.

25. Verfahren zur Herstellung einer Kautschukzusammensetzung, die eine verbesserte Abriebfestigkeit und Schneidbeständigkeit aufweist, wobei diese Zusammensetzung auf Basis eines Dienelastomers, eines Verstärkerfüllstoffs, eines Weichmachersystems und eines Vernetzungssystems ist, wobei das Verfahren die folgenden Schritte umfasst:
• Mischen mindestens eines Verstärkerfüllstoffs und eines Weichmachersystems unter ein Dienelastomer während eines ersten sogenannten "nichtproduktiven" Schrittes, indem alles thermomechanisch ein oder mehrere Male geknetet wird, bis eine maximale Temperatur von zwischen 110 °C und 190 °C erreicht wird;
• Abkühlen des Ganzen auf eine Temperatur unter 100 °C;
• anschließendes Untermischen des Vernetzungssystems während eines zweiten sogenannten "produktiven" Schrittes;
• Kneten des Ganzen auf eine maximale Temperatur unter 110 °C,
und **dadurch gekennzeichnet, dass** das Weichmachersystem umfasst:
- zwischen 5 und 35 pce eines MES- oder TDAE-Öls;
- zwischen 5 und 35 pce eines Polylimonen-Harzes.

26. Verfahren nach Anspruch 25, wobei der Anteil an Polylimonen-Harz zwischen 5 und 25 pce liegt.

27. Verfahren nach Anspruch 26, wobei der Anteil an Polylimonen-Harz zwischen 5 und 20 pce liegt.

28. Verfahren nach einem der Ansprüche 25 bis 27, wobei die Glasübergangstemperatur (Tg) des Polylimonen-Harzes höher als 40 °C ist.

29. Verfahren nach einem der Ansprüche 25 bis 28, wobei die mittlere Molekularmasse (Mn) des Polylimonen-Harzes zahlenmäßig zwischen 400 und 2000 g/mol liegt.

30. Verfahren nach einem der Ansprüche 25 bis 29, wobei der Anteil an MES- oder TDAE-Öl zwischen 10 und 30 pce liegt.

31. Verfahren nach einem der Ansprüche 25 bis 30, wobei der Gesamtanteil an Weichmachersystem zwischen 15 und 45 pce liegt.

32. Verfahren nach einem der Ansprüche 25 bis 31, wobei das Weichmachersystem des Weiteren einen Triester von Glycerol mit ungesättigter Fettsäure (C₁₂-C₂₂) umfasst.

33. Verfahren nach Anspruch 32, wobei der Triester ein Glyceroltrioleat ist.

34. Verfahren nach Anspruch 33, wobei das Glyceroltrioleat in Form eines pflanzlichen Sonnenblumen- oder Rapsöls vorliegt.

35. Verfahren nach einem der Ansprüche 32 bis 34, wobei der Anteil an Triester zwischen 5 und 35 pce liegt.

36. Verfahren nach einem der Ansprüche 32 bis 35, wobei der Gesamtanteil an Weichmachersystem zwischen 20 und 70 pce liegt.

37. Verfahren nach einem der Ansprüche 25 bis 36, wobei das Dienelastomer aus der Gruppe, bestehend aus Polybutadienen, natürlichem Kautschuk, Synthese-Polyisoprenen, Butadien-Copolymeren, Isopren-Copolymeren und Mischungen aus diesen Elastomeren ausgewählt ist.

38. Verfahren nach einem der Ansprüche 25 bis 37, wobei der Anteil an Verstärkerfüllstoff zwischen 20 und 200 pce liegt.

39. Benutzung einer Zusammensetzung nach einem der Ansprüche 1 bis 24 zur Erzeugung einer Fertigware oder eines Halbfabrikats, die/das für ein Kraftfahrzeug-Aufhängungssystem bestimmt ist.

40. Benutzung nach Anspruch 39, wobei die Fertigware ein Reifen ist.

41. Benutzung nach Anspruch 39, wobei das Halbfabrikat eine Reifenlauffläche ist.

42. Benutzung einer Zusammensetzung nach einem der Ansprüche 12 bis 17 zur Erzeugung einer Winterreifenlauffläche.

43. Fertigware, die für ein Kraftfahrzeug-Aufhängungssystem bestimmt ist, umfassend eine Zusammensetzung nach einem der Ansprüche 1 bis 24.

44. Fertigware nach Anspruch 43, bestehend aus einem Reifen.

45. Winterreifen, umfassend eine Kautschukzusammensetzung nach einem der Ansprüche 12 bis 17.

46. Halbfabrikat, das für ein Kraftfahrzeug-Aufhängungssystem bestimmt ist, umfassend eine Zusammensetzung nach einem der Ansprüche 1 bis 24.

47. Halbfabrikat nach Anspruch 46, bestehend aus einer Reifenlauffläche.

48. Winterreifenlauffläche, umfassend eine Kautschukzusammensetzung nach einem der Ansprüche 12 bis 17.

49. Weichmachersystem, das zur Weichmachung einer Dien-Kautschukzusammensetzung benutzt werden kann, **dadurch gekennzeichnet, dass** es ein MES- oder TDAE-Öl und ein Polylimonen-Harz umfasst.

50. Weichmachersystem nach Anspruch 49, **dadurch gekennzeichnet, dass** es des Weiteren einen Triester von Glycerol mit ungesättigter Fettsäure (C₁₂-C₂₂) umfasst.

51. Weichmachersystem nach Anspruch 50, wobei der Triester ein Glyceroltrioleat ist.

52. Weichmachersystem nach Anspruch 51, wobei das Glyceroltrioleat in Form eines pflanzlichen Sonnenblumen- oder Rapsöls vorliegt.

53. Benutzung eines Weichmachersystems nach einem der Ansprüche 49 bis 52 zur Weichmachung einer Dien-Kautschukzusammensetzung.
